# EUROPEAN PATENT APPLICATION

(11) **EP 4 183 745 A1**
(43) Date of publication of application: **24.05.2023**
(21) Application number: 21843219.3
(22) Date of filing: 09.07.2021
(51) Int. Cl.: C01D 15/04

(54) **LITHIUM IODIDE NONAQUEOUS SOLUTION, LITHIUM IODIDE, NONAQUEOUS SOLVATE OF LITHIUM IODIDE, METHOD FOR PRODUCING LITHIUM IODIDE NONAQUEOUS SOLUTION, METHOD FOR PRODUCING LITHIUM IODIDE, AND METHOD FOR PRODUCING NONAQUEOUS SOLVATE OF LITHIUM IODIDE**

(30) Priority: 16.07.2020 JP 2020122068
(71) Applicant: Central Glass Company, Limited, Ube-shi, Yamaguchi 755-0001 (JP)
(72) Inventor: TAKAHASHI, Arata, Kawagoe-shi, Saitama 350-1159 (JP); TSUKAZAKI, Rei, Kawagoe-shi, Saitama 350-1159 (JP); ITABASHI, Saori, Kawagoe-shi, Saitama 350-1159 (JP); ENDO, Yusuke, Kawagoe-shi, Saitama 350-1159 (JP)
(74) Representative: Mewburn Ellis LLP
(86) International application number: PCT/JP2021/025992
(87) International publication number: WO 2022/014501

(57) **Abstract**

Provided is a lithium iodide nonaqueous solution containing: a nonaqueous solvent; and lithium iodide, the lithium iodide nonaqueous solution having a water content per unit of lithium iodide (Y/X) of 7 or lower and an acid-derived component content of 4000 ppm or lower, the water content per unit of lithium iodide (Y/X) being determined as a ratio of a water content Y (ppm) of the lithium iodide nonaqueous solution to a lithium iodide concentration X (% by weight) of the lithium iodide nonaqueous solution.

## Description

### TECHNICAL FIELD

The present disclosure relates to a lithium iodide nonaqueous solution, lithium iodide, a nonaqueous solvate of lithium iodide, a method for producing a lithium iodide nonaqueous solution, a method for producing lithium iodide, and a method for producing a nonaqueous solvate of lithium iodide.

### BACKGROUND ART

Lithium iodide is used for applications such as absorbents for absorption refrigerators, co-catalysts for acetic acid production, and electrolytes for batteries.

Non-Patent Literature 1 discloses, as a production method of a lithium iodide aqueous solution and its hydrate, a method including reacting lithium carbonate and hydroiodic acid. Non-Patent Literature 2 also discloses a method including blowing hydrogen iodide gas into a slurry in which water is dispersed in lithium carbonate.

Lithium iodide shows high water absorption. When used as an electrolyte for batteries, lithium iodide having a lower water content is considered to be preferable. As a production method of a lithium iodide nonaqueous solution with a low water content, Patent Literature 1 discloses a method including dehydrating an alcohol solution of an alkali metal iodide or an alcohol solution of an alkaline earth metal iodide using a desiccant such as a molecular sieve or using a water separator membrane.

Patent Literature 1 describes in the reference examples that a dehydration step using methyl orthoformate and formic acid can lower the water content.

Lithium iodide anhydrate can be obtained by dehydrating lithium iodide hydrate obtained from a lithium iodide aqueous solution by heating or the like. Patent Literature 2 discloses a method for producing lithium iodide anhydrate at low temperature in a short time, in which lithium iodide hydrate is mixed with a solvent prepared by mixing water and 1-butanol, and the water in the lithium iodide hydrate is azeotropically distilled with a 1-butanol component.

### CITATION LIST

### - Patent Literature

Patent Literature 1: JP 2015-157743 A
Patent Literature 2: JP 6006994 B

### - Non-Patent Literature

Non-Patent Literature 1: *"*Kagaku Daijiten 9, Compact Edition", published by Kyoritsu Shuppan Co., Ltd., published in 1993, page 426
Non-Patent Literature 2: *"*Shin Jikken Kagaku Kouza 8 Mukikagoubutsu no gousei (II)", published by Maruzen Publishing Co., Ltd., published in 1977, page 462

### SUMMARY OF INVENTION

### - Technical Problem

Lithium iodide shows high water absorption and strongly binds to water. Lithium iodide nonaqueous solutions obtained by conventional methods and lithium iodide therefore contain a certain amount of water. The present inventors found out that there is a limit on reduction of such water. Specifically, the present inventors found out that, in the methods described in EXAMPLES of Patent Literature 1 and of Patent Literature 2, the water content of the lithium iodide nonaqueous solution obtained is about 2900 ppm, and the water content of the solid lithium iodide obtained is about 3200 ppm.

The method described in the reference examples of Patent Literature 1 was able to further lower the water content of the lithium iodide nonaqueous solution. However, in this method, formic acid disadvantageously remains in the nonaqueous solution. Remaining acid in nonaqueous solutions is not preferable for lithium iodide nonaqueous solutions for use in batteries. Therefore, it has been desired to lower the water content of lithium iodide nonaqueous solutions by a method that allows no acid to remain.

Patent Literature 1 discloses that the method described therein provides a lithium iodide-alcohol complex (alcohol adduct of lithium iodide). When considering the use of lithium iodide salt as an electrolyte for batteries, it is preferable that an appropriate solvate can be selected, as a solvate of lithium iodide, from the standpoint of compatibility and miscibility with components constituting a battery as there are a wide variety of combinations of battery configurations (i.e., positive electrode, negative electrode, electrolyte solution, etc.). From this standpoint, the present inventors have found that it is preferable to obtain, in addition to the alcohol adduct of lithium iodide described in Patent Literature 1, a nonaqueous solvate of lithium iodide using an appropriate nonaqueous solvent other than alcohol.

The present disclosure aims to provide a lithium iodide nonaqueous solution with a low water content and a low acid content, lithium iodide with a low water content and a low acid content, and methods for producing them. The present disclosure also aims to provide a nonaqueous solvate of lithium iodide containing lithium iodide and a nonaqueous solvent other than alcohol, and its production method.

### - Solution to Problem

As a result of intensive studies in view of such issues, the present inventors have found that reacting metallic lithium and iodine in a nonaqueous solvent can provide, using no acid, a lithium iodide nonaqueous solution having a low water content and lithium iodide having a low water content. The present inventors also found that a nonaqueous solvate of lithium iodide containing lithium iodide and a nonaqueous solvent other than alcohol can be obtained. These findings led to the present disclosure.

Specifically, a lithium iodide nonaqueous solution according to the present disclosure is a lithium iodide nonaqueous solution containing a nonaqueous solvent and lithium iodide, the lithium iodide nonaqueous solution having a water content per unit of lithium iodide (Y/X) of 7 or lower and an acid-derived component content of 4000 ppm or lower, the water content per unit of lithium iodide (Y/X) being determined as a ratio of a water content Y (ppm) of the lithium iodide nonaqueous solution to a lithium iodide concentration X (% by weight) of the lithium iodide nonaqueous solution.

The lithium iodide according to the present disclosure has a water content of lower than 500 ppm and an acid-derived component content of 12000 ppm or lower.

The nonaqueous solvate of lithium iodide according to the present disclosure contains lithium iodide and a nonaqueous solvent other than alcohol.

A method for producing a lithium iodide nonaqueous solution according to the present disclosure includes reacting metallic lithium with iodine in a nonaqueous solvent to generate lithium iodide in the nonaqueous solvent, thereby obtaining a lithium iodide nonaqueous solution. In the present disclosure, the nonaqueous solvent used in the reaction usually has a water content of lower than 10 ppm, preferably lower than 1 ppm. The nonaqueous solvent used in the reaction preferably contains substantially no acid-derived component.

A method for producing lithium iodide according to the present disclosure includes drying the lithium iodide nonaqueous solution obtained by the method according to the present disclosure to obtain lithium iodide having a water content of lower than 500 ppm and an acid-derived component content of 12000 ppm or lower.

A method for producing a nonaqueous solvate of lithium iodide according to the present disclosure includes drying the lithium iodide nonaqueous solution obtained by the method according to the present disclosure to obtain a nonaqueous solvate of lithium iodide containing a nonaqueous solvent and lithium iodide.

### - Advantageous Effects of Invention

The present disclosure can provide a lithium iodide nonaqueous solution having a low water content and a low acid content, lithium iodide having a low water content and a low acid content, and methods for producing them.

The present disclosure can also provide a nonaqueous solvate of lithium iodide containing lithium iodide and a nonaqueous solvent other than alcohol, and its production method.

### BRIEF DESCRIPTION OF DRAWINGS

FIG. 1 shows an XRD chart of lithium iodide according to Example 3.
FIG. 2 shows an XRD chart of lithium iodide according to Comparative Example 1.
FIG. 3 shows an XRD chart of commercially available lithium iodide.
FIG. 4 shows a ¹H NMR chart of lithium iodide according to Example 3.
FIG. 5 shows an anion chromatogram of a lithium iodide nonaqueous solution according to Example 1.
FIG. 6 shows an anion chromatogram of a blank measured by introducing only water under the same conditions as in FIG. 5.
FIG. 7 shows a cation chromatogram of the lithium iodide nonaqueous solution according to Example 1.

### DESCRIPTION OF EMBODIMENTS

Hereinafter, the present disclosure is described in detail. The following descriptions of constituent elements are examples of embodiments of the present disclosure. The present disclosure is not limited to these specific descriptions. Various modifications can be made within the scope of the gist of the present disclosure.

According to the method for producing a lithium iodide nonaqueous solution of the present disclosure, a lithium iodide nonaqueous solution having a low water content and a low acid content can be obtained.

First, the method for producing a lithium iodide nonaqueous solution of the present disclosure will be described.

The method for producing a lithium iodide nonaqueous solution according to the present disclosure includes reacting metallic lithium and iodine in a nonaqueous solvent to generate lithium iodide in the nonaqueous solvent, thereby obtaining a lithium iodide nonaqueous solution. In this manner, a lithium iodide nonaqueous solution having a low water content can be obtained.

A lithium iodide nonaqueous solution having a low water content can be obtained using no acid.

In the method for producing a lithium iodide nonaqueous solution according to the present disclosure, metallic lithium and iodine are reacted in a nonaqueous solvent to generate lithium iodide in the nonaqueous solvent. As a result, a lithium iodide nonaqueous solution containing the nonaqueous solvent used as a solvent and lithium iodide as a solute is obtained.

The obtained lithium iodide nonaqueous solution preferably has a water content per unit of lithium iodide (Y/X), which is determined as a ratio of the water content Y (ppm) of the lithium iodide nonaqueous solution to the lithium iodide concentration X (% by weight) of the lithium iodide nonaqueous solution, of 7 or lower and an acid-derived component content of 4000 ppm or lower. The water content per unit of lithium iodide (Y/X) is preferably 5 or lower, more preferably 3 or lower. In addition, the lithium iodide nonaqueous solution to be obtained preferably has as small an acid-derived component content as possible. Preferably, the lithium iodide nonaqueous solution contains substantially no acid-derived component. Further, the lithium iodide nonaqueous solution has an acid-derived component content of preferably 1000 ppm or lower, 250 ppm or lower, 50 ppm or lower, 20 ppm or lower, or 10 ppm or lower.

In the reaction of metallic lithium and iodine in a nonaqueous solvent, a catalyst needs not to be used. Therefore, a step of removing the catalyst is unnecessary. In addition, no especially high temperature is required. The reaction temperature is preferably lower than 80°C, more preferably 20°C to 50°C, still more preferably 20°C to 45°C. It is preferable to inhibit a temperature rise due to reaction heat to set the reaction temperature lower than 80°C, more preferably 20°C to 50°C, still more preferably 20°C to 45°C.

The amount of metallic lithium used is preferably 2.1 to 20.0 mol, more preferably 2.1 to 5.0 mol, per 1 mol of iodine. When the molar ratio of metallic lithium and iodine is within the above range, the reaction between metallic lithium and iodine is carried out without excess or deficiency, increasing the yield of lithium iodide. When lithium is added excessively, the lithium can be collected as a residue obtained from filtering after the reaction, and can be reused for the reaction in another lot.

Metallic lithium put into the nonaqueous solvent may have any form such as a lithium rod or lithium foil.

When the reaction temperature is as high as 80°C or higher, water is contained in the system, and the amount of metallic lithium used is not excessive relative to iodine, the reaction between lithium iodide and water may occur to generate hydrogen iodide and lithium hydroxide, and the lithium iodide nonaqueous solution may contain hydrogen iodide as an acid. Therefore, the conditions that does not allow generation of hydrogen iodide as described above are preferably set.

The nonaqueous solvent preferably contains at least one selected from the group consisting of ether solvents, acetal solvents, ester solvents, nitrile solvents, carbonate solvents, ketone solvents, amide solvents, and sulfur-containing solvents.

Also, the nonaqueous solvent is preferably an aprotic solvent.

The nonaqueous solvent more preferably contains at least one selected from the group consisting of ether solvents, acetal solvents, ester solvents, and amide solvents.

Specific examples of the nonaqueous solvent include ether solvents such as tetrahydrofuran, 2-methyltetrahydrofuran, 1,4-dioxane, diethyl ether, 1,2-dimethoxyethane (hereinafter also referred to as DME), diglyme, triglyme, tetraglyme, propylene glycol dimethyl ether, diethylene glycol dimethyl ether, dipropylene glycol dimethyl ether, 3-methoxypropionitrile, methoxyacetonitrile, and ethylene glycol bis(propionitrile) ether.

Examples of acetal solvents include 1,3-dioxane, 1,3-dioxolane (hereinafter also referred to as DOL), 4-methyldioxolane, 1,3,5-trioxane, dimethoxymethane, and 1,2-methylenedioxybenzene.

Examples of ester solvents include γ-butyrolactone, ε-caprolactone, γ-valerolactone, methyl formate, methyl acetate, ethyl acetate, isopropyl acetate, methyl propionate, and propylene glycol monomethyl ether acetate.

Examples of carbonate solvents include ethylene carbonate and ethylmethyl carbonate.

Examples of ketone solvents include acetone.

Examples of amide solvents include dimethylformamide, dimethylacetamide, and N-methyl-2-pyrrolidone.

The nonaqueous solvent preferably contains no alcoholic solvent. An alcoholic solvent reacts with metallic lithium to generate hydrogen. Generation of hydrogen is not preferred from the standpoint of the safety of the working environment, so generation of hydrogen is preferably avoided. The nonaqueous solvent containing no alcoholic solvent is therefore preferably used.

The expression "the nonaqueous solvent contains no alcoholic solvent" means that the amount of alcohol detected in the nonaqueous solvent is lower than 10 ppm as measured by ¹H NMR.

In the method for producing a lithium iodide nonaqueous solution according to the present disclosure, water is not used during the production, so that the water content of the produced lithium iodide nonaqueous solution can be extremely small.

The reference examples of Patent Literature 1 disclose the conditions for producing a lithium iodide solution that achieves a water content of 0.00% by weight. However, it is impossible to remove impurities derived from the acid catalyst used in the drying step. A lithium iodide nonaqueous solution used for battery applications preferably has an acid catalyst-derived component content of 50 ppm or lower, and preferably contains substantially no acid catalyst-derived component.

The presence of acid in electrolyte solutions for batteries is known to be undesirable (e.g., JP 5679719 B, JP 2001-307772 A).

In the method for producing a lithium iodide nonaqueous solution of the present disclosure, unlike the method disclosed in the reference examples of Patent Literature 1, no acid is used during the production and therefore the produced lithium iodide nonaqueous solution has an acid catalyst-derived component content of 4000 ppm or lower. The produced lithium iodide nonaqueous solution can be made substantially free of an acid catalyst-derived component.

The method for producing a lithium iodide nonaqueous solution according to the present disclosure includes a reaction that uses no water and no acid, unlike conventionally known methods. Therefore, the lithium iodide nonaqueous solution produced can have a much lower water content and contain less acid-derived components as compared with the prior art.

Next, the lithium iodide nonaqueous solution of the present disclosure will be described.

The lithium iodide nonaqueous solution according to the present disclosure is a lithium iodide nonaqueous solution containing a nonaqueous solvent and lithium iodide. The lithium iodide nonaqueous solution has a water content per unit of lithium iodide (Y/X), which is determined as a ratio of the water content Y (ppm) of the lithium iodide nonaqueous solution to the lithium iodide concentration X (% by weight) of the lithium iodide nonaqueous solution, of 7 or lower and an acid-derived component content of 4000 ppm or lower.

The lithium iodide nonaqueous solution of the present disclosure has a water content per unit of lithium iodide (Y/X) of 7 or lower and an acid-derived component content of 4000 ppm or lower. Specifically, the water content and the acid-derived component content of the lithium iodide nonaqueous solution are both low.

As can be understood by referring to Examples 1 and 2 described later, the water content Y of the solution is proportional to the lithium iodide concentration X of the solution. Accordingly, it is appropriate to determine the level of the water content of the solution using, as an indicator, the water content relative to the lithium iodide concentration of the solution. Therefore, a nonaqueous solution having a water content per unit of lithium iodide (Y/X) of 7 or lower can be considered to be a lithium iodide nonaqueous solution having a low water content.

The lithium iodide nonaqueous solution of the present disclosure has a low water content per unit of lithium iodide (Y/X) of 7 or lower and a low acid-derived component content of 4000 ppm or lower, and therefore is suitably used for battery applications.

In the lithium iodide nonaqueous solution according to the present disclosure, the water content per unit of lithium iodide (Y/X) is preferably 5 or lower, more preferably 3 or lower. The acid-derived component content is preferably 1000 ppm or lower, 250 ppm or lower, 50 ppm or lower, 20 ppm or lower, or 10 ppm or lower.

When the nonaqueous solvent contained in the lithium iodide nonaqueous solution is a nonaqueous solvent used in electrolyte solutions for batteries, the lithium iodide nonaqueous solution containing lithium iodide dissolved in the nonaqueous solvent can be used as an electrolyte solution for batteries as it is without special purification. Other necessary components may be added to the lithium iodide nonaqueous solution, and the obtained solution may be used as an electrolyte solution for batteries.

For example, the lithium iodide nonaqueous solution may contain other electrolytes such as LiPF₆, LiBF₄, LiClO₄, and lithium bis(fluorosulfonyl)imide (LiFSI).

Moreover, since the lithium iodide nonaqueous solution can be converted into solid lithium iodide by removing the solvent, it can be used as a raw material for obtaining solid lithium iodide.

The lithium iodide concentration X of the lithium iodide nonaqueous solution is preferably 5 to 70% by weight, more preferably 10 to 50% by weight.

The water content Y of the lithium iodide nonaqueous solution is preferably lower than 200 ppm. Moreover, the lithium iodide nonaqueous solution preferably contains substantially no water. The expression "the lithium iodide nonaqueous solution contains substantially no water" means that the water content is below the detection limit (0.1 ppm or lower) in the water content measurement method described below.

Most preferably, the lithium iodide nonaqueous solution contains substantially no acid-derived component.

The expression "the lithium iodide nonaqueous solution contains substantially no acid-derived component" means that the acid-derived component is not detected (below the detection limit) in the method for measuring the acid-derived component content described below.

The lithium iodide concentration of the lithium iodide nonaqueous solution can be measured by the following procedure using anion chromatography.

A lithium iodide nonaqueous solution is precisely weighed, and diluted with ultrapure water to about 10 ppm. The resulting aqueous solution is used to measure the iodide ion concentration by anion chromatography. Then, the obtained iodide ion concentration is converted to the lithium iodide concentration.

The water content of the lithium iodide nonaqueous solution can be measured using a coulometric Karl Fischer moisture meter. In measurement of the water content of the lithium iodide nonaqueous solution, about 1 g sample of the lithium iodide nonaqueous solution precisely weighed can be directly analyzed.

The water content of the lithium iodide nonaqueous solution as used herein means the water content (ppm) of about 1 g sample of the lithium iodide nonaqueous solution as measured with a coulometric Karl Fischer moisture meter.

The acid-derived component content of the lithium iodide nonaqueous solution can be measured as the content of the acid-derived component as an organic acid by quantification of side chain hydrogen using ¹H NMR. Also, measurement of the concentration of anion components other than iodide ions by anion chromatography enables measurement of the content of the acid-derived component as an inorganic acid.

The acid-derived component content of the lithium iodide nonaqueous solution as used herein means the content (ppm) of the acid-derived component measured as an organic acid by quantification of the side chain hydrogen using ¹H NMR.

When side chain hydrogen is not detected (10 ppm or lower) in the quantification of side chain hydrogen using ¹H NMR and anions other than iodide ions are not detected (100 ppm or lower) using anion chromatography, such a lithium iodide nonaqueous solution can be considered to contain substantially no acid-derived component.

The nonaqueous solvent contained in the lithium iodide nonaqueous solution preferably contains at least one selected from the group consisting of ether solvents, acetal solvents, ester solvents, nitrile solvents, carbonate solvents, ketone solvents, amide solvents, and sulfur-containing solvents.

The nonaqueous solvent is preferably an aprotic solvent.

The nonaqueous solvent more preferably contains at least one selected from the group consisting of ether solvents, acetal solvents, ester solvents, and amide solvents.

Specific examples of the nonaqueous solvent include ether solvents such as tetrahydrofuran, 2-methyltetrahydrofuran, 1,4-dioxane, diethyl ether, 1,2-dimethoxyethane (hereinafter also referred to as DME), diglyme, triglyme, tetraglyme, propylene glycol dimethyl ether, diethylene glycol dimethyl ether, dipropylene glycol dimethyl ether, 3-methoxypropionitrile, methoxyacetonitrile, and ethylene glycol bis(propionitrile) ether.

Examples of acetal solvents include 1,3-dioxane, 1,3-dioxolane (hereinafter also referred to as DOL), 4-methyldioxolane, 1,3,5-trioxane, dimethoxymethane, and 1,2-methylenedioxybenzene.

Examples of ester solvents include γ-butyrolactone, ε-caprolactone, γ-valerolactone, methyl formate, methyl acetate, ethyl acetate, isopropyl acetate, methyl propionate, and propylene glycol monomethyl ether acetate.

Examples of carbonate solvents include ethylene carbonate and ethylmethyl carbonate.

Examples of ketone solvents include acetone.

Examples of amide solvents include dimethylformamide, dimethylacetamide, and N-methyl-2-pyrrolidone.

The nonaqueous solvent preferably does not contain an alcoholic solvent.

Next, the method for producing lithium iodide of the present disclosure will be described.

The method for producing lithium iodide of the present disclosure includes drying the lithium iodide nonaqueous solution obtained by the method of the present disclosure, thereby obtaining a lithium iodide having a water content of lower than 500 ppm and an acid-derived component content of 12000 ppm or lower.

The method for producing lithium iodide of the present disclosure includes drying the lithium iodide nonaqueous solution obtained by the method of the present disclosure.

The drying can be performed by methods such as hot air drying, vacuum drying, and infrared drying using a dryer.

The drying preferably includes decompressing the lithium iodide nonaqueous solution in an inert gas atmosphere. More preferably, the drying includes decompressing the lithium iodide nonaqueous solution at 0.1 kPa or higher and 5.0 kPa or lower in an inert gas atmosphere and maintaining the atmospheric temperature during the decompression at 20°C or higher and 100°C or lower.

In order to prevent the lithium iodide obtained by the drying from absorbing water vapor in the environment, the lithium iodide obtained by the drying is preferably kept in an inert gas atmosphere or in a dry room environment until it is stored in a container in a storing step. An environment in which the dew point of the dry room environment is, for example, -30°C or lower is preferred.

When the drying temperature is higher than 100°C and water is contained in the system, the reaction between lithium iodide and water may occur to generate hydrogen iodide and lithium hydroxide, and the lithium iodide may contain hydrogen iodide as an acid. Therefore, the conditions that does not allow generation of hydrogen iodide as described above are preferably set.

The resulting lithium iodide has a water content of lower than 500 ppm and an acid-derived component content of 12000 ppm or lower.

The water content of the lithium iodide is preferably lower than 400 ppm, more preferably lower than 200 ppm, still more preferably lower than 100 ppm. The lithium iodide is also preferably substantially free of water.

The obtained lithium iodide preferably has as small an acid-derived component content as possible. Preferably, the obtained lithium iodide substantially does not contain an acid-derived component. Further, the lithium iodide preferably has an acid-derived component content of 2500 ppm or lower, 400 ppm or lower, 50 ppm or lower, 20 ppm or lower, or 10 ppm or lower.

In the drying, an acid catalyst is not used for drying. Therefore, the acid-derived component does not increase in the drying step. When the acid-derived component content of the lithium iodide nonaqueous solution obtained by the method of the present disclosure is 4000 ppm or lower, the acid-derived component content of the lithium iodide can be set to 12000 ppm or lower.

Next, the lithium iodide of the present disclosure will be described.

The lithium iodide according to the present disclosure has a water content of lower than 500 ppm and an acid-derived component content of 12000 ppm or lower.

The lithium iodide of the present disclosure is solid lithium iodide having a very low water content and a very low acid-derived component content. The lithium iodide of the present disclosure may be lithium iodide in the form of powder.

Having an extremely low water content and an extremely low acid-derived component content, the lithium iodide of the present disclosure can be favorably used as an electrolyte for batteries. The lithium iodide of the present disclosure can be dissolved in a nonaqueous solvent that does not contain water or acid-derived components to be used as an electrolyte solution for batteries with an extremely low water content and an extremely low acid-derived component content.

The lithium iodide preferably has a water content of lower than 400 ppm, more preferably lower than 200 ppm, still more preferably lower than 100 ppm. The lithium iodide preferably contains substantially no water.

The expression "the lithium iodide contains substantially no water" means that the water content is below the detection limit (0.1 ppm or lower) in the water content measurement method described below.

The lithium iodide according to the present disclosure may have an acid-derived component content of 2500 ppm or lower, 400 ppm or lower, 50 ppm or lower, 20 ppm or lower, or 10 ppm or lower.

Most preferably, the lithium iodide contains substantially no acid-derived component.

The expression "the lithium iodide contains substantially no acid-derived component" means that the acid-derived component is not detected in the method for measuring the acid-derived component content described below.

The water content of lithium iodide can be measured using a coulometric Karl Fischer moisture meter. In measurement of the water content of lithium iodide, about 1 g sample of lithium iodide is precisely weighed, and dissolved in about 2 g of methanol having a known water content to prepare a measurement sample. The obtained measurement sample can be subjected to analysis.

The water content of lithium iodide as used herein refers to the water content (ppm) of about 1 g sample of lithium iodide dissolved in about 2 g of methanol having a known water content, measured using a coulometric Karl Fischer moisture meter.

The acid-derived component content of lithium iodide can be measured as the content of the acid-derived component as an organic acid by quantification of side chain hydrogen using ¹H NMR. Also, measurement of the concentration of anion components other than iodide ions by anion chromatography enables measurement of the content of the acid-derived component as an inorganic acid.

The acid-derived component content of the lithium iodide as used herein means the content (ppm) of the acid-derived component measured as an organic acid by quantification of the side chain hydrogen using ¹H NMR.

When side chain hydrogen is not detected in the determination of side chain hydrogen using ¹H NMR and anions other than iodide ions are not detected using anion chromatography, such lithium iodide can be considered to contain substantially no acid-derived component.

The lithium iodide according to the present disclosure preferably includes a nonaqueous solvate of lithium iodide.

The nonaqueous solvent contained in the nonaqueous solvate preferably contains at least one selected from the group consisting of ether solvents, acetal solvents, ester solvents, nitrile solvents, carbonate solvents, ketone solvents, amide solvents, and sulfur-containing solvents.

The nonaqueous solvent contained in the nonaqueous solvate is preferably an aprotic solvent.

The nonaqueous solvent contained in the nonaqueous solvate more preferably contains at least one selected from the group consisting of ether solvents, acetal solvents, ester solvents, and amide solvents.

The lithium iodide preferably has a crystalline structure.

Whether or not the lithium iodide is a nonaqueous solvate and whether or not the lithium iodide has a crystalline structure can be determined by ¹H NMR analysis and XRD analysis.

The lithium iodide of the present disclosure can be dissolved in a nonaqueous solvent to provide the lithium iodide nonaqueous solution of the present disclosure. Any nonaqueous solvent that can be used for the lithium iodide nonaqueous solution of the present disclosure can be used. The nonaqueous solvent for dissolving the lithium iodide may be a nonaqueous solvent different from the nonaqueous solvent used in the production of the lithium iodide.

Next, the method for producing a nonaqueous solvate of lithium iodide and the nonaqueous solvate of lithium iodide of the present disclosure will be described.

The method for producing a nonaqueous solvate of lithium iodide of the present disclosure includes drying the lithium iodide nonaqueous solution obtained by the method of the present disclosure, thereby obtaining a nonaqueous solvate of lithium iodide containing a nonaqueous solvent and lithium iodide.

According to this method, a nonaqueous solvate of lithium iodide containing a nonaqueous solvent and lithium iodide can be obtained.

Such a nonaqueous solvate of lithium iodide can be selected as appropriate for use from the standpoint of compatibility and incompatibility with components constituting batteries.

When a nonaqueous solvent other than alcohol is used as the nonaqueous solvent in the method for producing a nonaqueous solvate of lithium iodide of the present disclosure, the nonaqueous solvate of lithium iodide of the present disclosure containing lithium iodide and a nonaqueous solvent other than alcohol can be obtained.

The nonaqueous solvent other than alcohol preferably contains at least one selected from the group consisting of ether solvents, acetal solvents, ester solvents, nitrile solvents, carbonate solvents, ketone solvents, amide solvents, and sulfur-containing solvents.

The nonaqueous solvent other than alcohol is preferably an aprotic solvent.

The nonaqueous solvent other than alcohol more preferably contains at least one selected from the group consisting of ether solvents, acetal solvents, ester solvents, and amide solvents.

The nonaqueous solvate of lithium iodide preferably has a crystalline structure.

Whether or not the lithium iodide is a nonaqueous solvate and whether or not the nonaqueous solvate of lithium iodide has a crystalline structure can be determined by ¹H NMR analysis and XRD analysis.

### EXAMPLES

The present invention will be specifically described below with reference to Examples, but the present invention is not limited to these Examples.

### [Method for measuring yield and purity of lithium iodide]

About 0.2 g sample of a lithium iodide nonaqueous solution or lithium iodide powder was precisely weighed, and diluted with ultrapure water to about 10 ppm. The obtained aqueous solution was used to measure the iodide ion concentration by anion chromatography. The values resulting from the measurement were converted to the lithium iodide concentration and regarded as the yield and purity.

### [Method for measuring water content of powder and solution]

Measurement was performed using a coulometric Karl Fischer moisture meter.

In the case of a liquid sample, about 1 g sample was precisely weighed and directly analyzed.

In the case of a solid sample, about 1 g sample of lithium iodide powder was accurately weighed and dissolved in about 2 g of methanol having a known water content to prepare a measurement sample.

### [Method for measuring the amount of nonaqueous solvent in powder]

Quantitation was performed by ¹H NMR analysis. About 1 g of lithium iodide nonaqueous solvate and about 0.1 g of 1,4-trifluoromethylbenzene as an internal standard substance were accurately weighed and dissolved in about 2 g of deuterated acetonitrile to prepare a solution for measurement. The amount of the nonaqueous solvent in the powder was calculated from the integrated value ratio of the peak derived from the internal standard substance and the peak derived from the nonaqueous solvent.

### [Reagent]

Reagents purchased from the following were used for synthesis without further purification.
1,3-Dioxolane (hereinafter referred to as "DOL"): available from Sigma-Aldrich Japan
1,2-Dimethoxyethane (hereinafter referred to as "DME") for electrochemistry: available from Kanto Chemical Co., Ltd.
1,3,5-Trioxane (hereinafter referred to as "TOX"): available from Sigma-Aldrich Japan
Diethylene glycol dimethyl ether (hereinafter referred to as "DG") for electrochemistry: available from Kanto Chemical Co., Inc.
3-Methoxypropionitrile (hereinafter referred to as "MPN"): available from Tokyo Chemical Industry Co. Ltd.
Ethyl acetate (hereinafter referred to as "EtOAc"), super dehydrated: available from FUJIFILM Wako Pure Chemical Industries, Ltd.
Ethylene carbonate (hereinafter referred to as "EC"), lithium battery grade: available from Kishida Chemical Co., Ltd.
Ethyl methyl carbonate (hereinafter referred to as "EMC"), lithium battery grade: available from Kishida Chemical Co., Ltd.
Acetone (hereinafter referred to as "AC"), super dehydrated: available from FUJIFILM Wako Pure Chemical Co., Ltd.
γ-Butyrolactone (hereinafter referred to as "GBL") for electrochemistry: available from Kanto Chemical Co., Ltd.
N-Methyl-2-pyrrolidone (hereinafter referred to as "NMP"): available from Nacalai Tesque, Inc.
Lithium foil, 0.1 mm in thickness, 18 mm in width: available from Honjo Metal Co., Ltd.
Lithium rod, 10 mm in diameter, 10 mm in length: available from Honjo Chemical Corporation
Iodine: available from Godo Shigen Co., Ltd.

### [Example 1] (Preparation 1 of lithium iodide nonaqueous solution)

A 1-L SUS316 autoclave equipped with a stirring blade, a thermocouple protection tube, and a dip tube was placed in an argon-atmosphere glove box, and charged with 9.63 g (1.41 mol) of lithium rod and 265 g of DOL. After sealing the reaction vessel, the pressure was reduced to 0.05 kPa or lower, and a solution of 63.5 g (0.250 mol) of iodine dissolved in 217 g of DME was introduced into the vessel while the temperature inside the glove box was maintained at 45°C or lower. After the introduction of the total amount of iodine, the mixture was stirred for 10 hours for continuous aging. The maximum temperature of the solution during the reaction was 45°C. After opening the reaction vessel, excess lithium was filtered off to obtain 513 g of lithium iodide nonaqueous solution with a yield of 97.7%. The resulting nonaqueous solution had a water content of 29.9 ppm and a lithium iodide concentration of 12.7% by weight.

### [Example 2] (Preparation 2 of lithium iodide nonaqueous solution)

A 50-mL two-necked flask equipped with a stirrer and an internal thermometer was charged with 3.63 g (0.0143 mol) of iodine, 5.05 g of DOL, and 4.14 g of DME in an argon-atmosphere glove box. Subsequently, 210 mg (0.0300 mol) of lithium foil was introduced into the flask little by little while the temperature inside the glove box was maintained at 45°C or lower. After the introduction of the total amount of lithium, the mixture was stirred for 10 hours for continuous aging. The maximum temperature of the solution during the reaction was 45°C.

Excessive lithium foil was filtered off to obtain 12.4 g of lithium iodide nonaqueous solution with a yield of 94.6%. The resulting nonaqueous solution had a water content of 83.8 ppm and a lithium iodide concentration of 29.2% by weight.

### [Example 5] (Preparation 3 of lithium iodide nonaqueous solution)

A 50-mL two-necked flask equipped with a stirrer and an internal thermometer was charged with 40 mg (0.0058 mol) of lithium foil and 5.05 g of DOL in an argon-atmosphere glove box. After sealing the reaction vessel, the pressure was reduced to 0.05 kPa or lower, and a solution of 0.65 g (0.0026 mol) of iodine dissolved in 4.14 g of DME was introduced into the flask while the temperature inside the glove box was maintained at 45°C or lower. After the introduction of the total amount of iodine, the mixture was stirred for 10 hours for continuous aging. The maximum temperature of the solution during the reaction was 45°C. After opening the reaction vessel, excess lithium was filtered off to obtain 9.2 g of lithium iodide nonaqueous solution with a yield of 97.7%. The resulting nonaqueous solution had a water content of 50.4 ppm and a lithium iodide concentration of 7.3% by weight.

### [Example 6] (Preparation 4 of lithium iodide nonaqueous solution)

A lithium iodide nonaqueous solution was obtained in an amount of 14.1 g with a yield of 96.6% as in Example 5 except that 320 mg (0.0461 mol) of lithium foil, 2.86 g of DOL, 5.44 g (0.0214 mol) of iodine, and 6.43 g of DME were used. The maximum temperature of the solution during the reaction was 45°C. The resulting nonaqueous solution had a water content of 124.7 ppm and a lithium iodide concentration of 39.2% by weight.

### [Example 7] (Preparation 5 of lithium iodide nonaqueous solution)

A lithium iodide nonaqueous solution was obtained in an amount of 12.3 g with a yield of 95.3% as in Example 5 except that 990 mg (0.1426 mol) of lithium foil, 6.43 g of DOL, 3.63 g (0.0143 mol) of iodine, and 2.86 g of DME were used. The maximum temperature of the solution during the reaction was 45°C. The resulting nonaqueous solution had a water content of 18.0 ppm and a lithium iodide concentration of 23.2% by weight.

### [Example 8] (Preparation 6 of lithium iodide nonaqueous solution)

A lithium iodide nonaqueous solution was obtained in an amount of 12.2 g with a yield of 96.4% as in Example 5 except that 210 mg (0.0303 mol) of lithium foil, 5.05 g of DOL, 3.63 g (0.0143 mol) of iodine, and 2.86 g of DG instead of DME were used. The maximum temperature of the solution during the reaction was 43°C. The resulting nonaqueous solution had a water content of 81.7 ppm and a lithium iodide concentration of 30.2% by weight.

### [Example 9] (Preparation 7 of lithium iodide nonaqueous solution)

A lithium iodide nonaqueous solution was obtained in an amount of 12.2 g with a yield of 96.9% as in Example 5 except that 210 mg (0.0303 mol) of lithium foil, 5.05 g of TOX instead of DOL, 3.63 g (0.0143 mol) of iodine, and 2.86 g of DME were used. The maximum temperature of the solution during the reaction was 41°C. The resulting nonaqueous solution had a water content of 82.0 ppm and a lithium iodide concentration of 30.4% by weight.

### [Example 10] (Preparation 8 of lithium iodide nonaqueous solution)

A lithium iodide nonaqueous solution was obtained in an amount of 12.3 g with a yield of 97.7% as in Example 5 except that 210 mg (0.0303 mol) of lithium foil, 5.05 g of TOX instead of DOL, 3.63 g (0.0143 mol) of iodine, and 2.86 g of DG instead of DME were used. The maximum temperature of the solution during the reaction was 39°C. The resulting nonaqueous solution had a water content of 80.5 ppm and a lithium iodide concentration of 30.5% by weight.

### [Example 11] (Preparation 9 of lithium iodide nonaqueous solution)

A 50-mL two-necked flask equipped with a stirrer and an internal thermometer was charged with 210 mg (0.0303 mol) of lithium foil, 5.05 g of DOL, and 4.14 g of DME in an argon-atmosphere glove box. Then, 3.63 g (0.0143 mol) of iodine was introduced into the flask using a funnel while the temperature inside the glove box was maintained at 45°C or lower. After introduction of the total amount of iodine, the mixture was stirred for 10 hours for continuous aging. The maximum temperature of the solution during the reaction was 45°C. After the reaction vessel was opened, excess lithium was filtered off to obtain 12.1 g of lithium iodide nonaqueous solution with a yield of 94.8%. The resulting nonaqueous solution had a water content of 83.7 ppm and a lithium iodide concentration of 29.9% by weight.

### [Example 12] (Preparation 10 of lithium iodide nonaqueous solution)

A lithium iodide nonaqueous solution was obtained in an amount of 12.2 g with a yield of 95.3% as in Example 11 except that DME was not used and 9.19 g of DOL was used. The maximum temperature of the solution during the reaction was 45°C. The resulting nonaqueous solution had a water content of 84.0 ppm and a lithium iodide concentration of 29.8% by weight.

### [Example 13] (Preparation 11 of lithium iodide nonaqueous solution)

A lithium iodide nonaqueous solution was obtained in an amount of 12.1 g with a yield of 94.9% as in Example 12 except that DOL was not used and 9.19 g of MPN was used. The maximum temperature of the solution during the reaction was 45°C. The resulting nonaqueous solution had a water content of 82.4 ppm and a lithium iodide concentration of 30.0% by weight.

### [Example 14] (Preparation 12 of lithium iodide nonaqueous solution)

A lithium iodide nonaqueous solution was obtained in an amount of 12.1 g with a yield of 94.3% as in Example 12 except that DOL was not used and 9.19 g of EtOAc was used. The maximum temperature of the solution during the reaction was 45°C. The resulting nonaqueous solution had a water content of 80.2 ppm and a lithium iodide concentration of 29.8% by weight.

### [Example 15] (Preparation 13 of lithium iodide nonaqueous solution)

A lithium iodide nonaqueous solution was obtained in an amount of 9.2 g with a yield of 94.8% as in Example 12 except that DOL was not used and 5.05 g of EC, 4.14 g of EMC, 40 mg (0.0058 mol) of lithium foil, and 0.65 g (0.0026 mol) of iodine were used. The maximum temperature of the solution during the reaction was 45°C. The resulting nonaqueous solution had a water content of 46.1 ppm and a lithium iodide concentration of 7.1% by weight.

### [Example 16] (Preparation 14 of lithium iodide nonaqueous solution)

A lithium iodide nonaqueous solution was obtained in an amount of 12.1 g with a yield of 93.8% as in Example 12 except that 9.19 g of AC was used instead of DOL. The maximum temperature of the solution during the reaction was 45°C. The resulting nonaqueous solution had a water content of 80.5 ppm and a lithium iodide concentration of 29.7% by weight.

### [Example 17] (Preparation 15 of lithium iodide nonaqueous solution)

A lithium iodide nonaqueous solution was obtained in an amount of 12.2 g with a yield of 95.1% as in Example 12 except that 9.19 g of GBL was used instead of DOL. The maximum temperature of the solution during the reaction was 45°C. The resulting nonaqueous solution had a water content of 83.5 ppm and a lithium iodide concentration of 29.9% by weight.

### [Example 18] (Preparation 16 of lithium iodide nonaqueous solution)

A lithium iodide nonaqueous solution was obtained in an amount of 27.1 g with a yield of 98.5% as in Example 12 except that 9.19 g of NMP was used instead of DOL, 1.04 g (0.150 mol) of lithium foil, and 18.0 g (0.0709 mol) of iodine were used. The maximum temperature of the solution during the reaction was 45°C. The resulting nonaqueous solution had a water content of 191.3 ppm and a lithium iodide concentration of 69.1% by weight.

### [Example 19] (Preparation 17 of lithium iodide nonaqueous solution)

A 50-mL two-necked flask equipped with a stirrer and an internal thermometer was charged with 280 mg (0.0403 mol) of lithium foil and 2.86 g of DOL in an argon-atmosphere glove box. After sealing the reaction vessel, the pressure was reduced to 0.05 kPa or lower, and a solution of 5.44 g (0.0214 mol) of iodine dissolved in 6.43 g of DME was introduced into the flask while the temperature inside the glove box was maintained at 45°C or lower. The maximum temperature of the solution during the reaction was 45°C. After the introduction of the total amount of iodine, the mixture was stirred for 10 hours for continuous aging, whereby 13.8 g of lithium iodide nonaqueous solution was obtained with a yield of 90.6%. The resulting nonaqueous solution had a water content of 211.1 ppm and a lithium iodide concentration of 37.7% by weight.

In Examples 1, 2, and 5 to 19, no desiccant such as acid was used, and therefore no component derived from the desiccant (acid) was present in the system. Table 1 shows the results.

### [Example 3] (Preparation 1 of solid lithium iodide)

A 500-mL three-necked flask equipped with a stirrer was charged with 79.9 g of the lithium iodide nonaqueous solution obtained in Example 1, and the pressure was gradually reduced to 0.1 kPa to remove the solvent. To 28.3 g of the solid obtained was added 200 mL of DME in an argon-atmosphere glove box to prepare a suspension. After stirring for one hour, the suspension was filtered to obtain a powder. The powder was dried at 0.05 kPa for two hours, whereby 25.7 g of powder was obtained.

The powder was confirmed to be lithium iodide containing a lithium iodide-DME complex (DME adduct of lithium iodide) by ¹H NMR and XRD analysis. The powder had a nonaqueous solvent content of 61.6% by weight and a water content of 94.9 ppm.

### [Example 4] (Preparation 2 of solid lithium iodide)

A 500-mL three-necked flask equipped with a stirrer was charged with 10.0 g of the lithium iodide nonaqueous solution obtained in Example 2, and the pressure was gradually reduced to 0.1 kPa to remove the solvent. To 7.9 g of the solid obtained was added 200 mL of DME in an argon-atmosphere glove box to prepare a suspension. After stirring for one hour, the suspension was filtered to obtain a powder. The powder was dried at 0.05 kPa for two hours, whereby 7.4 g of powder was obtained. The powder was confirmed to be lithium iodide containing a lithium iodide-DME complex (DME adduct of lithium iodide) by ¹H NMR and XRD analysis. The powder had a nonaqueous solvent content of 59.0% by weight and a water content of 116.0 ppm.

### [Example 20] (Preparation 3 of solid lithium iodide)

A 500-mL three-necked flask equipped with a stirrer was charged with 10.0 g of the lithium iodide nonaqueous solution obtained in Example 5, and the pressure was gradually reduced to 0.1 kPa to remove the solvent. To 8.0 g of the solid obtained was added 200 mL of DME in an argon-atmosphere glove box to prepare a suspension. After stirring for one hour, the suspension was filtered to obtain a powder. The powder was dried at 0.05 kPa for two hours, whereby 7.5 g of powder was obtained.

The powder was confirmed to be lithium iodide containing a lithium iodide-DME complex (DME adduct of lithium iodide) by ¹H NMR and XRD analysis. The powder had a nonaqueous solvent content of 59.9% by weight and a water content of 97.2 ppm.

### [Example 21] (Preparation 4 of solid lithium iodide)

A powder was obtained in an amount of 8.3 g as in Example 20 except that 10.0 g of the lithium iodide nonaqueous solution obtained in Example 6 was used. The powder had a nonaqueous solvent content of 53.3% by weight and a water content of 92.8 ppm.

### [Example 22] (Preparation 5 of solid lithium iodide)

A powder was obtained in an amount of 5.8 g as in Example 20 except that 10.0 g of the lithium iodide nonaqueous solution obtained in Example 7 was used. The powder had a nonaqueous solvent content of 61.1% by weight and a water content of 96.5 ppm.

### [Example 23] (Preparation 6 of solid lithium iodide)

A powder was obtained in an amount of 7.6 g as in Example 20 except that 10.0 g of the lithium iodide nonaqueous solution obtained in Example 8 was used. The powder had a nonaqueous solvent content of 59.7% by weight and a water content of 83.3 ppm.

### [Example 24] (Preparation 7 of solid lithium iodide)

A powder was obtained in an amount of 7.6 g as in Example 20 except that 10.0 g of the lithium iodide nonaqueous solution obtained in Example 9 was used. The powder had a nonaqueous solvent content of 60.1% by weight and a water content of 84.0 ppm.

### [Example 25] (Production 8 of solid lithium iodide)

A powder was obtained in an amount of 7.7 g as in Example 20 except that 10.0 g of the lithium iodide nonaqueous solution obtained in Example 10 was used. The powder had a nonaqueous solvent content of 61.6% by weight and a water content of 89.6 ppm.

### [Example 26] (Preparation 9 of solid lithium iodide)

A powder was obtained in an amount of 7.4 g as in Example 20 except that 10.0 g of the lithium iodide nonaqueous solution obtained in Example 11 was used. The powder had a nonaqueous solvent content of 58.7% by weight and a water content of 73.7 ppm.

### [Example 27] (Preparation 10 of solid lithium iodide)

A powder was obtained in an amount of 7.3 g as in Example 20 except that 10.0 g of the lithium iodide nonaqueous solution obtained in Example 12 was used. The powder had a nonaqueous solvent content of 58.4% by weight and a water content of 77.9 ppm.

### [Example 28] (Preparation 11 of solid lithium iodide)

A powder was obtained in an amount of 5.0 g as in Example 20 except that 10.0 g of the lithium iodide nonaqueous solution obtained in Example 13 was used. The powder had a nonaqueous solvent content of 54.1% by weight and a water content of 60.3 ppm.

### [Example 29] (Preparation 12 of solid lithium iodide)

A powder was obtained in an amount of 6.2 g as in Example 20 except that 10.0 g of the lithium iodide nonaqueous solution obtained in Example 14 was used. The powder had a nonaqueous solvent content of 53.0% by weight and a water content of 65.1 ppm.

### [Example 30] (Preparation 13 of solid lithium iodide)

A powder was obtained in an amount of 1.2 g as in Example 20 except that 10.0 g of the lithium iodide nonaqueous solution obtained in Example 15 was used. The powder had a nonaqueous solvent content of 53.9% by weight and a water content of 53.8 ppm.

### [Example 31] (Preparation 14 of solid lithium iodide)

A powder was obtained in an amount of 7.4 g as in Example 20 except that 10.0 g of the lithium iodide nonaqueous solution obtained in Example 16 was used. The powder had a nonaqueous solvent content of 59.6% by weight and a water content was 82.2 ppm.

### [Example 32] (Preparation 15 of solid lithium iodide)

A powder was obtained in an amount of 5.8 g as in Example 20 except that 10.0 g of the lithium iodide nonaqueous solution obtained in Example 17 was used. The powder had a nonaqueous solvent content of 51.2% by weight and a water content of 82.4 ppm.

### [Example 33] (Preparation 16 of solid lithium iodide)

A powder was obtained in an amount of 6.0 g as in Example 20, except that 10.0 g of the lithium iodide nonaqueous solution obtained in Example 18 was used. The powder had a nonaqueous solvent content of 50.4% by weight and a water content of 89.2 ppm.

In Examples 3, 4, and 20 to 33, since no desiccant such as acid was used, no component derived from the desiccant (acid) was present in the system. Table 2 shows the results.

### [Comparative Example 1 (Comparative Example 1-1 and Comparative Example 1-2)] (Preparation 1 of solid lithium iodide and lithium iodide nonaqueous solution for comparison)

A 1-L round-bottom flask was charged with 300 g of lithium iodide (water content: 7290 ppm) synthesized according to the method described in Non-Patent Literature 1, and the pressure was reduced to 1 kPa with stirring using an evaporator, followed by drying at 80°C for one hour, at 100°C for one hour, and at 120°C for two hours.

After restoring the pressure of the flask with nitrogen, the crystals adhering to the wall surface of the flask were scraped off in a glove box, followed by further drying with heat at 120°C at 1 kPa for six hours. The process including restoring the pressure with nitrogen in the flask, scraping off the crystals, and drying at 120°C at 1 kPa for two hours was repeated twice, i.e., the process was carried out for a total of three times, to obtain 298 g of lithium iodide dried under reduced pressure. The water content measured of the obtained powder was 524.0 ppm. The powder was confirmed not to contain a nonaqueous solvate of lithium iodide by ¹H NMR and XRD analysis. In this comparative example, since no desiccant such as acid was used, no component derived from the desiccant (acid) was present in the system. Table 2 shows the results.

Further, the powder obtained above was dissolved in a solvent mixture of DOL:DME = 1:1 (volume ratio) in a manner that the concentration of lithium iodide in the nonaqueous solution was as shown in Table 1. The water content of the obtained nonaqueous solution was measured.

Comparative Example 1-1 was an example in which the concentration of lithium iodide was adjusted to the concentration of lithium iodide in Example 1, and Comparative Example 1-2 was an example in which the concentration of lithium iodide was adjusted to the concentration of lithium iodide in Example 2.

In the present comparative example, since no desiccant such as acid was used, no component derived from the desiccant (acid) was present in the system. Table 1 shows the results.

### [Comparative Example 2] (Preparation 2 of solid lithium iodide and lithium iodide nonaqueous solution for comparison)

Lithium iodide was synthesized according to the method of Patent Literature 1. The inside of a 200-ml reaction vessel equipped with a stirrer, a reflux condenser with a stoppered fractionating head, a thermometer, a dropping funnel, and a solid inlet was sufficiently purged with nitrogen. Ethanol in an amount of 70.0 g was put into the reaction vessel from the dropping funnel. Lithium hydroxide monohydrate in an amount of 4.25 g (0.101 mol) was added through the solid inlet with stirring. Methyl iodide in an amount of 21.5 g (0.151 mol) was put into the reaction vessel from the dropping funnel. The contents were stirred for 21 hours for continuous aging while the temperature inside the reaction vessel was maintained at 30°C.

The inside of the reaction vessel was cooled to room temperature, and the pressure was reduced to 1 kPa with a vacuum pump. Thus, excess methyl iodide and the generated ethyl methyl ether were distilled off. After releasing the pressure reduction state in the reaction vessel with nitrogen, 19.8 g of ethanol was added from the dropping funnel. The reaction solution had a water content of 43300 ppm.

The reflux condenser, fractionating head, dropping funnel, and solid inlet were removed from the reaction vessel. Instead, a Soxhlet extractor filled with 43.1 g of synthetic zeolite (trade name: molecular sieve 3A-1/8) was mounted on the reaction vessel. Then, the reaction vessel was heated until the reflux of ethanol started, and dehydration was continued with refluxing for nine hours. After cooling, the reaction solution had a water content of 2900 ppm and a lithium iodide concentration of 12.8% by weight. In this comparative example, since no desiccant such as acid was used, no component derived from the desiccant (acid) was present in the system. Table 1 shows the results.

The reaction solution was placed in a 200-ml round-bottom flask, and ethanol was distilled off using an evaporator under the conditions of 75°C and 3 kPa over one hour. Thereafter, the reaction solution was further concentrated to dryness over three hours under the conditions of 130°C and 1 kPa. Thus, 13.2 g of white powdery lithium iodide crystal (yield 97.4%) was obtained. The lithium iodide had a purity of 99.1% and a water content in the crystal of 3200 ppm. The powder was confirmed not to contain a nonaqueous solvate of lithium iodide by ¹H NMR and XRD analysis. Since no desiccant such as acid was used in this comparative example, no component derived from the desiccant (acid) was present in the system. Table 2 shows the results.

### [Comparative Example 3] (Preparation 3 of solid lithium iodide and lithium iodide nonaqueous solution for comparison)

Lithium iodide was synthesized with reference to the method of Patent Literature 1.

The inside of a 200-ml reaction vessel equipped with a stirrer, a reflux condenser with a stoppered fractionating head, a thermometer, a dropping funnel, and a solid inlet was sufficiently purged with nitrogen. Ethanol in an amount of 70.0 g was put into the reaction vessel from the dropping funnel. Lithium hydroxide monohydrate in an amount of 4.25 g (0.101 mol) was added through the solid inlet with stirring. Methyl iodide in an amount of 21.5 g (0.151 mol) was put into the reaction vessel from the dropping funnel. The contents were stirred for 21 hours for continuous aging, while the temperature inside the reaction vessel was maintained at 30°C.

The inside of the reaction vessel was cooled to room temperature, and the pressure was reduced to 1 kPa with a vacuum pump. Thus, excess methyl iodide and the generated ethyl methyl ether were distilled off. After releasing the pressure reduction state in the reaction vessel with nitrogen, 19.8 g of ethanol was added from the dropping funnel. The reaction solution had a water content of 43300 ppm.

After ethanol was distilled off from the reaction mixture under reduced pressure, 15 g of 2-propanol was charged into the reaction vessel from the dropping funnel.

Methyl orthoformate in an amount of 7.43 g (0.070 mol) and formic acid in an amount of 0.12 g (0.003 mol) were added from the dropping funnel with stirring. Stirring was continued for three hours for continuous aging while the temperature inside the reaction vessel was maintained at 50°C. After cooling to room temperature, the reaction solution had a water content of 20.7 ppm and a residual acid-derived component content of 4170 ppm. In this comparative example, since the formic acid-derived component contained in the reaction system was not removed, 100% of the formic acid-derived component contained in the reaction system remained. Table 1 shows the results.

The resulting reaction mixture was put in a 100-mL two-necked flask equipped with a stirrer, and the pressure was gradually reduced to 0.1 kPa at 80°C to remove the solvent. The obtained powder was dried at 0.05 kPa for two hours to obtain powder. The powder was confirmed to be lithium iodide containing a lithium iodide-2-propanol complex (2-propanol adduct of lithium iodide) by ¹H NMR. The powder had a nonaqueous solvent content of 11.0% by weight and a water content of 167.0 ppm.

The obtained powder in an amount of 0.5 g was dissolved in 2 g of deuterated methanol, to which 1,4-trifluoromethylbenzene was added as an internal standard substance. According to the quantification of the formic acid-derived component therein by ¹H NMR, the residual acid-derived component content was 14400 ppm, equivalent to 69.2% of the added amount. Table 2 shows the results.

**[Table 1]**

| Lithium iodide nonaqueous solution | Lithium iodide concentration X in the solution (% by weight) | Water content Y (ppm) | Water content per unit of lithium iodide (Y/X) | Residual acid-derived component content (ppm) |
|---|---|---|---|---|
| Example 1 | 12.7 | 29.9 | 2.35 | - |
| Example 2 | 29.2 | 83.8 | 2.87 | - |
| Example 5 | 7.3 | 50.4 | 6.90 | - |
| Example 6 | 39.2 | 124.7 | 3.18 | - |
| Example 7 | 23.2 | 18.0 | 0.77 | - |
| Example 8 | 30.2 | 81.7 | 2.70 | - |
| Example 9 | 30.4 | 82.0 | 2.70 | - |
| Example 10 | 30.5 | 80.5 | 2.64 | - |
| Example 11 | 29.9 | 83.7 | 2.80 | - |
| Example 12 | 29.8 | 84.0 | 2.82 | - |
| Example 13 | 30.0 | 82.4 | 2.74 | - |
| Example 14 | 29.8 | 80.2 | 2.69 | - |
| Example 15 | 7.1 | 46.1 | 6.52 | - |
| Example 16 | 29.7 | 80.5 | 2.71 | - |
| Example 17 | 29.9 | 83.5 | 2.79 | - |
| Example 18 | 69.1 | 191.3 | 2.77 | - |
| Example 19 | 37.7 | 211.1 | 5.60 | - |
| Comparative Example 1-1 | 11.4 | 91.7 | 8.04 | - |
| Comparative Example 1-2 | 28.5 | 229.0 | 8.04 | - |
| Comparative Example 2 | 12.8 | 2900.0 | 226.56 | - |
| Comparative Example 3 | 19.0 | 20.7 | 1.09 | 4170 |

**[Table 2]**

| | Lithium iodide nonaqueous solution | Water content | Residual acid-derived component content (ppm) | Nonaqueous solvent content in powder (% bv weight) |
|---|---|---|---|---|
| Example 3 | Example 1 | 94.9 | - | 61.6 |
| Example 4 | Example 2 | 116.0 | - | 59.0 |
| Example 20 | Example 5 | 97.2 | - | 59.9 |
| Example 21 | Example 6 | 92.8 | - | 53.3 |
| Example 22 | Example 7 | 96.5 | - | 61.1 |
| Example 23 | Example 8 | 83.3 | - | 59.7 |
| Example 24 | Example 9 | 84.0 | - | 60.1 |
| Example 25 | Example 10 | 89.6 | - | 61.6 |
| Example 26 | Example 11 | 73.7 | - | 58.7 |
| Example 27 | Example 12 | 77.9 | - | 58.4 |
| Example 28 | Example 13 | 60.3 | - | 54.1 |
| Example 29 | Example 14 | 65.1 | - | 53.0 |
| Example 30 | Example 15 | 53.8 | - | 53.9 |
| Example 31 | Example 16 | 82.2 | - | 59.6 |
| Example 32 | Example 17 | 82.4 | - | 51.2 |
| Example 33 | Example 18 | 89.2 | - | 50.4 |
| Comparative Example 1 | - | 524.0 | - | - |
| Comparative Example 2 | - | 3200 | - | - |
| Comparative Example 3 | - | 167.0 | 14400 | 11.0 |

Tables 1 and 2 show that, in Examples 1 to 33, lithium iodide nonaqueous solutions and solid (powder) lithium iodides obtained each had a low water content and contained no acid-derived component.

Although the water content Y of Example 2 was higher than that of Example 1, the lithium iodide concentration X of Example 2 was also higher. In terms of the water content per unit of lithium iodide (Y/X), the lithium iodide nonaqueous solutions of Example 1 and Example 2 can be considered to have similarly low water content.

In Example 5, compared to Example 1, the lithium iodide nonaqueous solution was prepared in a manner that the amount of iodine used was smaller and the amount of metallic lithium used was smaller relative to 1 mol of iodine. The lithium iodide nonaqueous solution of Example 5 therefore had a lower lithium iodide concentration X in the solution and a higher water content Y than those in Example 1.

In Example 6, compared to Example 5, the lithium iodide nonaqueous solution was prepared in a manner that the amounts of metallic lithium and iodine used were larger and the DOL ratio in the solution was higher. The lithium iodide nonaqueous solution of Example 6 had a higher lithium iodide concentration X in the solution and a higher water content Y than those in Example 5.

In Example 7, compared to Example 6, the lithium iodide nonaqueous solution was prepared in a manner that the amount of metallic lithium used was larger and the DME ratio in the solution was higher. The lithium iodide nonaqueous solution of Example 7 had a lower lithium iodide concentration X in the solution and a lower water content Y than those in Example 6.

In Example 8, compared to Example 5, the lithium iodide nonaqueous solution was prepared using DG instead of DME, and the amounts of metallic lithium and iodine used were larger than those in Example 5. The lithium iodide nonaqueous solution of Example 8 had a higher lithium iodide concentration X in the solution and a higher water content Y than those in Example 5.

In Example 9, compared to Example 5, the lithium iodide nonaqueous solution was prepared using TOX instead of DOL, and the amounts of metallic lithium and iodine used were larger than those in Example 5. The lithium iodide nonaqueous solution of Example 9 had a higher lithium concentration X in the solution and a higher water content Y than those in Example 5.

In Example 10, compared to Example 9, the lithium iodide nonaqueous solution was prepared using DG instead of DME. The lithium iodide nonaqueous solution of Example 10 had a lithium iodide concentration X in the solution and a water content Y at the same levels as those in Example 9.

In Example 11, compared to Example 5, the lithium iodide nonaqueous solution was prepared by introducing prilled iodine particles into a solution, and the amounts of metallic lithium and iodide used were larger than those in Example 5. The lithium iodide nonaqueous solution of Example 11 had a higher lithium iodide concentration X in the solution and a higher water content Y than those in Example 5.

In Example 12, compared to Example 11, the lithium iodide nonaqueous solution was prepared using only DOL without using DME. The lithium iodide nonaqueous solution of Example 12 had a lithium iodide concentration X in the solution and a water content Y at the same levels as those in Example 11.

In Example 13, compared to Example 11, the lithium iodide nonaqueous solution was prepared by using MPN without using DOL and DME. The lithium iodide nonaqueous solution of Example 13 had a lithium iodide concentration X in the solution and a water content Y at the same levels as those in Example 11.

In Example 14, compared to Example 11, the lithium iodide nonaqueous solution was prepared by using EtOAc without using DOL and DME. The lithium iodide nonaqueous solution of Example 14 had a lithium iodide concentration X in the solution and a water content Y at the same levels as those in Example 11.

In Example 15, compared to Example 11, the lithium iodide nonaqueous solution was prepared in a manner that the amounts of metallic lithium and iodine used were smaller, DOL and DME were not used, and EC and EMC were used instead. The lithium iodide nonaqueous solution of Example 15 had a lower lithium iodide concentration X in the solution and a lower water content Y than those in Example 11.

In Example 16, compared to Example 11, the lithium iodide nonaqueous solution was prepared by using AC without using DOL and DME. The lithium iodide nonaqueous solution of Example 16 had a lithium iodide concentration X in the solution and a water content Y at the same level as those in Example 11.

In Example 17, compared to Example 11, the lithium iodide nonaqueous solution was prepared using GBL without using DOL and DME. The lithium iodide nonaqueous solution of Example 17 had a lithium iodide concentration X in the solution and a water content Y at the same level as those in Example 11.

In Example 18, compared to Example 11, the lithium iodide nonaqueous solution was prepared in a manner that the amounts of metallic lithium and iodine used were larger, DOL and DME were not used, and NMP was used instead. The lithium iodide nonaqueous solution of Example 18 had a higher lithium iodide concentration X in the solution and a higher water content Y than those in Example 11.

In Example 19, the lithium iodide nonaqueous solution was prepared as in Example 6, except that the amount of metallic lithium used was adjusted to be less than 2.1 mol per 1 mol of iodine. The lithium iodide nonaqueous solution of Example 19 had a lower lithium iodide concentration X in the solution and a higher water content Y than those in Example 6.

In Examples 1 to 18 in which the amount of metallic lithium used was 2.1 to 20.0 mol per 1 mol of iodine and the amounts of metallic lithium and iodine used satisfy the predetermined relation, the yield was higher than that in Example 19 in which the above relation was not satisfied.

In Comparative Example 1-1, the lithium iodide nonaqueous solution was prepared so that the lithium iodide concentration was approximately the same as that in Example 1. The lithium iodide nonaqueous solution of Comparative Example 1-1 had a higher water content Y than that in Example 1. In Comparative Example 1-2, the lithium iodide nonaqueous solution was prepared so that the lithium iodide concentration was approximately the same as that in Example 2. The lithium iodide nonaqueous solution of Comparative Example 1-2 had a higher water content Y than that in Example 2. Both of Comparative Examples 1-1 and 1-2 had higher water content per unit of lithium iodide (Y/X) than Examples 1 and 2.

In Comparative Example 2, the water content per unit of lithium iodide (Y/X) was high.

In Comparative Example 3, the water content per unit of lithium iodide (Y/X) was low but an acid-derived component unfavorably remained.

The lithium iodides of Examples 3 and 4 and Examples 20 to 33 each had a low water content, while the lithium iodides of Comparative Examples 1 and 2 each had a high water content.

The lithium iodide of Comparative Example 3 had a low water content but unfavorably contained a residual acid-derived component.

Analysis data of the lithium iodide nonaqueous solutions and lithium iodides in EXAMPLES are described below.

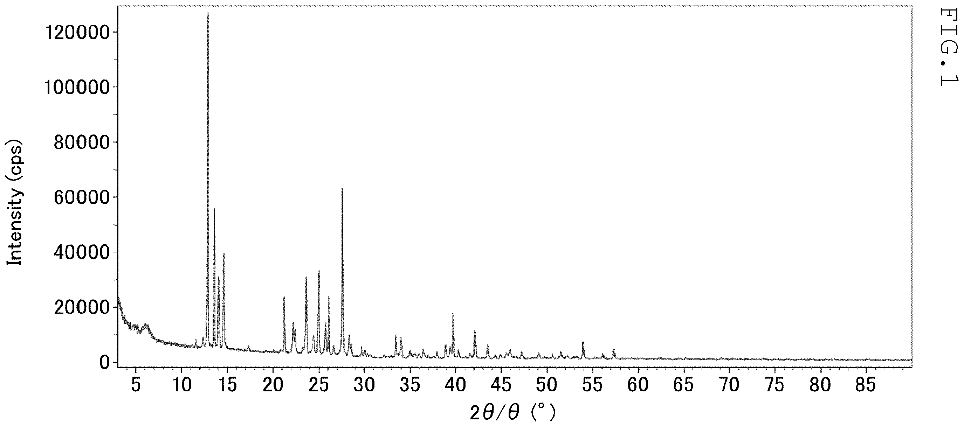

FIG. 1 is an XRD chart of the lithium iodide according to Example 3.

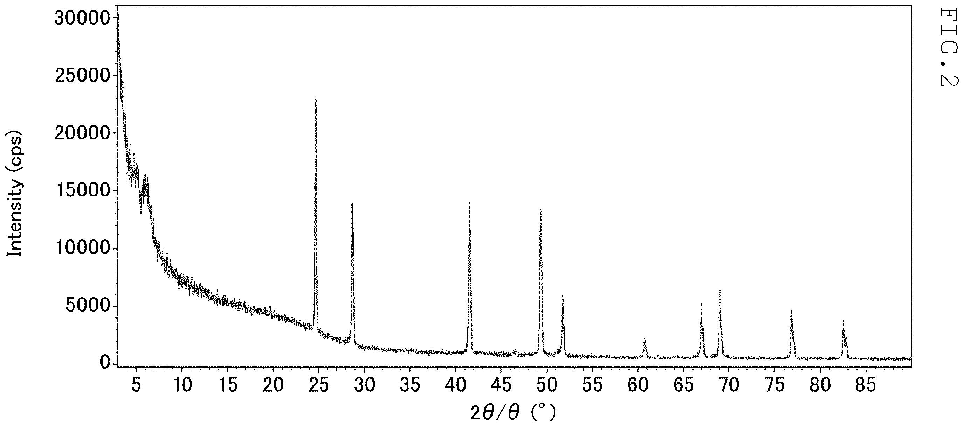

FIG. 2 is an XRD chart of the lithium iodide according to Comparative Example 1.

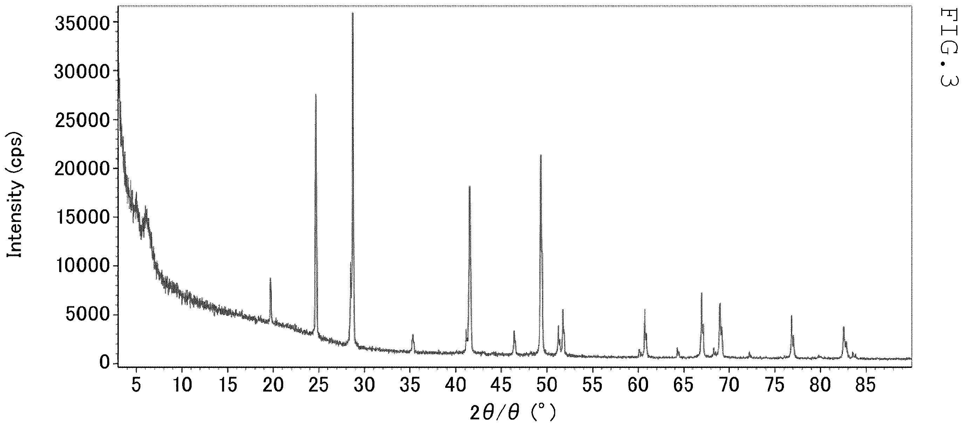

FIG. 3 is an XRD chart of commercially available lithium iodide.

In Comparison of FIG. 2 and FIG. 3, the peak positions in XRD are almost the same. That is, the commercially available lithium iodide and the lithium iodide according to Comparative Example 1 have the same structure, and do not contain a nonaqueous solvate of lithium iodide.

On the other hand, FIG. 1 shows many peaks that do not appear in FIGs. 2 and 3. These peaks suggest the presence of a nonaqueous solvate of lithium iodide.

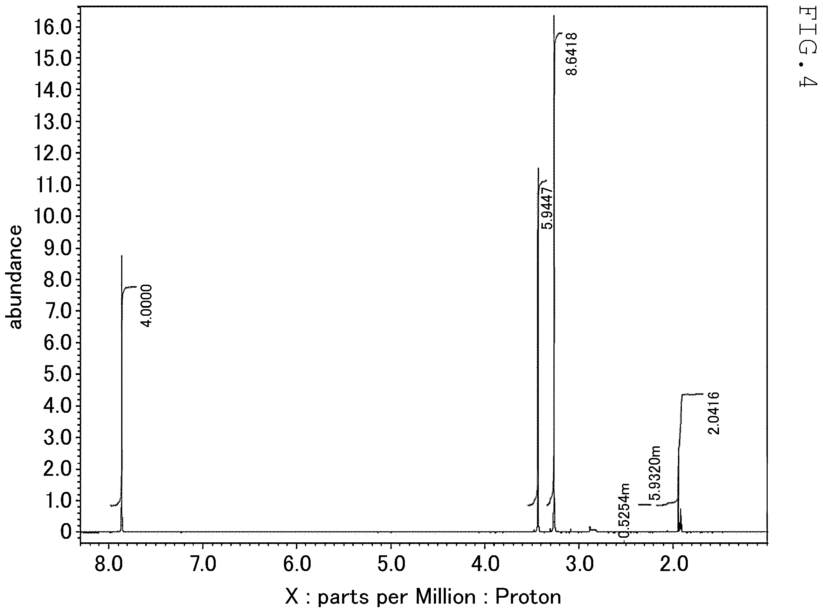

FIG. 4 is a ¹H NMR chart of lithium iodide according to Example 3.

This chart shows peaks (3.4 ppm: -OCH₂-, 3.3 ppm: CH₃O-) attributable to DME, which is a nonaqueous solvent, while the peaks (7.9 to 8.2 ppm) attributable to formic acid are not shown (the peak seen at 7.9 ppm is attributable to 1,4-trifluoromethylbenzene, the internal standard substance).

This shows that the lithium iodide according to Example 3 contains a nonaqueous solvate with DME and does not contain an acid such as formic acid.

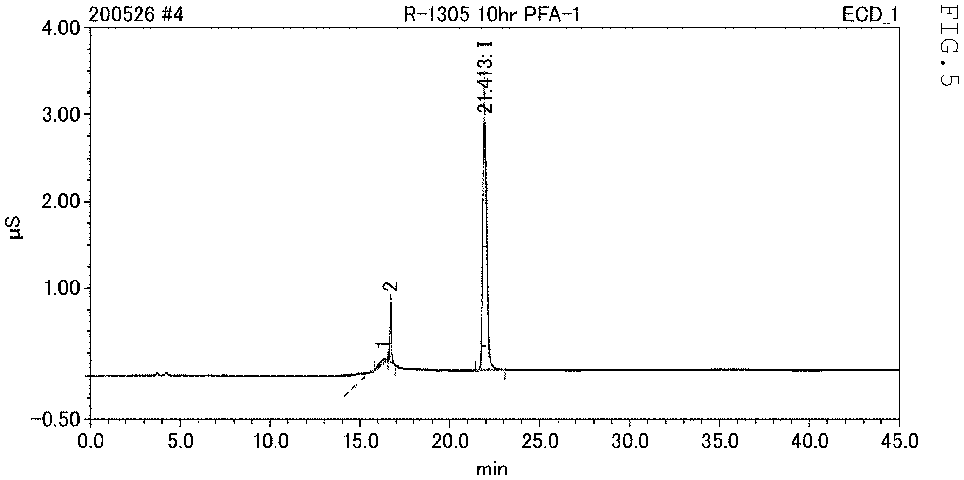

FIG. 5 is an anion chromatogram of the lithium iodide nonaqueous solution according to Example 1.

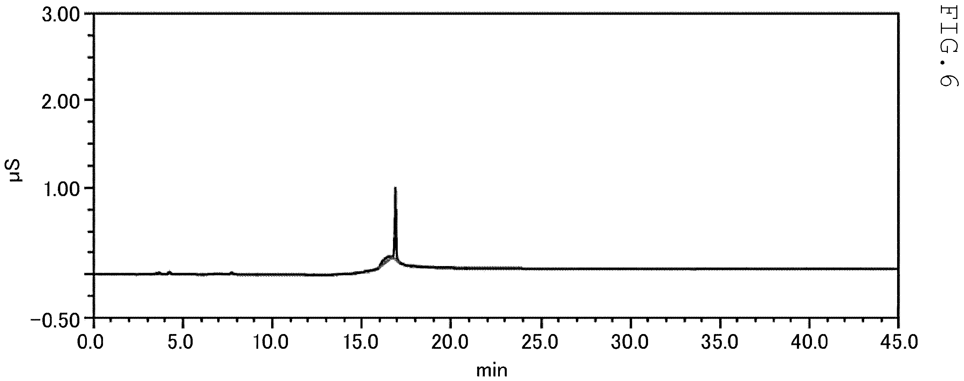

FIG. 6 is an anion chromatogram of a blank measured by introducing only water under the same conditions as in FIG. 5.

In FIG. 5, a peak of iodide ions is observed at around 21 min. The peak seen at around 16 to 17 min is the same as the peak seen in the blank, and therefore corresponds to noise. That is, among the peaks observed in FIG. 5, the effective peak is only the iodide ion peak seen at around 21 min.

When an acid-derived component is present in the lithium iodide nonaqueous solution, anions other than iodide ions (for example, formate ions) should be observed, but anions other than iodide ions are not observed. This indicates that no acid-derived component is present in the lithium iodide nonaqueous solution.

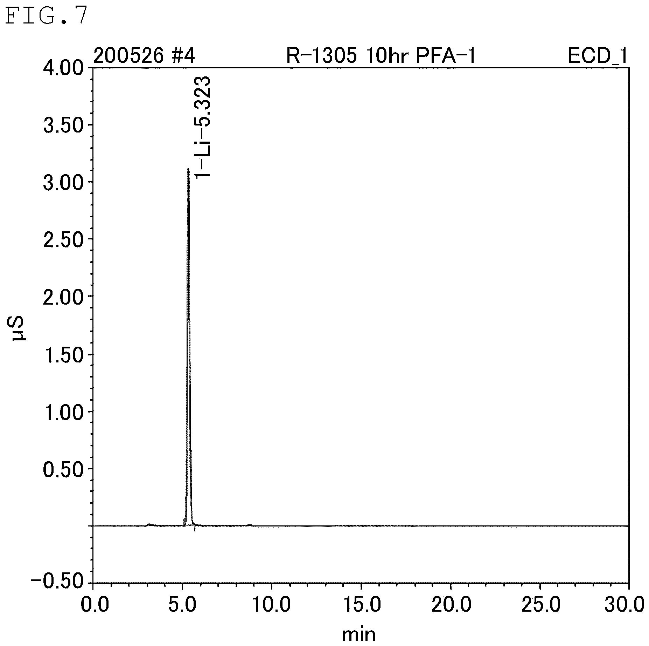

FIG. 7 is a cation chromatogram of the lithium iodide nonaqueous solution according to Example 1.

In FIG. 7, a lithium ion peak is observed at around 5 min, and no other peaks are observed.

This shows that, in combination with the results shown in FIG. 5, the lithium iodide nonaqueous solution according to Example 1 contains only lithium iodide as an ionizable component.

### INDUSTRIAL APPLICABILITY

The present disclosure can provide a lithium iodide nonaqueous solution having a low water content and a low acid content and lithium iodide having a low water content and a low acid content, which can be used for battery applications.

The present application claims priority to Patent Application No. 2020-122068 filed in Japan on July 16, 2020 under the Paris Convention and provisions of national law in designated State and regulations of transition countries, the entire contents of which are hereby incorporated by reference.

## Claims

1. A lithium iodide nonaqueous solution comprising:
a nonaqueous solvent; and
lithium iodide,
the lithium iodide nonaqueous solution having a water content per unit of lithium iodide (Y/X) of 7 or lower and an acid-derived component content of 4000 ppm or lower, the water content per unit of lithium iodide (Y/X) being determined as a ratio of a water content Y (ppm) of the lithium iodide nonaqueous solution to a lithium iodide concentration X (% by weight) of the lithium iodide nonaqueous solution.

2. The lithium iodide nonaqueous solution according to claim 1,
wherein the lithium iodide concentration X of the lithium iodide nonaqueous solution is 5 to 70% by weight.

3. The lithium iodide nonaqueous solution according to claim 1 or 2,
wherein the water content Y of the lithium iodide nonaqueous solution is lower than 200 ppm.

4. The lithium iodide nonaqueous solution according to any one of claims 1 to 3,
wherein the nonaqueous solvent contains at least one selected from the group consisting of ether solvents, acetal solvents, ester solvents, nitrile solvents, carbonate solvents, ketone solvents, amide solvents, and sulfur-containing solvents.

5. The lithium iodide nonaqueous solution according to any one of claims 1 to 4,
wherein the nonaqueous solvent is an aprotic solvent.

6. The lithium iodide nonaqueous solution according to any one of claims 1 to 5,
wherein the nonaqueous solvent contains at least one selected from the group consisting of ether solvents, acetal solvents, ester solvents, and amide solvents.

7. Lithium iodide having a water content of lower than 500 ppm and an acid-derived component content of 12000 ppm or lower.

8. The lithium iodide according to claim 7,
wherein the water content is lower than 100 ppm.

9. The lithium iodide according to claim 7 or 8, comprising a nonaqueous solvate of lithium iodide.

10. The lithium iodide according to claim 9,
wherein a nonaqueous solvent contained in the nonaqueous solvate contains at least one selected from the group consisting of ether solvents, acetal solvents, ester solvents, nitrile solvents, carbonate solvents, ketone solvents, amide solvents, and sulfur-containing solvents.

11. The lithium iodide according to claim 9 or 10,
wherein a nonaqueous solvent contained in the nonaqueous solvate is an aprotic solvent.

12. The lithium iodide according to any one of claims 9 to 11,
wherein a nonaqueous solvent contained in the nonaqueous solvate contains at least one selected from the group consisting of ether solvents, acetal solvents, ester solvents, and amide solvents.

13. The lithium iodide according to any one of claims 7 to 12,
wherein the lithium iodide has a crystalline structure.

14. A nonaqueous solvate of lithium iodide, comprising:
lithium iodide; and
a nonaqueous solvent other than alcohol.

15. The nonaqueous solvate of lithium iodide according to claim 14,
wherein the nonaqueous solvent other than alcohol contains at least one selected from the group consisting of ether solvents, acetal solvents, ester solvents, nitrile solvents, carbonate solvents, ketone solvents, amide solvents, and sulfur-containing solvents.

16. The nonaqueous solvate of lithium iodide according to claim 14 or 15,
wherein the nonaqueous solvent other than alcohol is an aprotic solvent.

17. The nonaqueous solvate of lithium iodide according to any one of claims 14 to 16,
wherein the nonaqueous solvent other than alcohol contains at least one selected from the group consisting of ether solvents, acetal solvents, ester solvents, and amide solvents.

18. The nonaqueous solvate of lithium iodide according to any one of claims 14 to 17,
wherein the nonaqueous solvate of lithium iodide has a crystalline structure.

19. A method for producing a lithium iodide nonaqueous solution, comprising
reacting metallic lithium and iodine in a nonaqueous solvent to generate lithium iodide in the nonaqueous solvent, thereby obtaining a lithium iodide nonaqueous solution.

20. The method for producing a lithium iodide nonaqueous solution according to claim 19,
wherein the lithium iodide nonaqueous solution obtained has a water content per unit of lithium iodide (Y/X) of 7 or lower and an acid-derived component content of 4000 ppm or lower, where the water content per unit of lithium iodide (Y/X) is determined as a ratio of a water content Y (ppm) of the lithium iodide nonaqueous solution to the lithium iodide concentration X (% by weight) of the lithium iodide nonaqueous solution.

21. The method for producing a lithium iodide nonaqueous solution according to claim 19 or 20,
wherein the metallic lithium is used in an amount of 2.1 to 20.0 mol per 1 mol of the iodine.

22. The method for producing a lithium iodide nonaqueous solution according to any one of claims 19 to 21,
wherein the nonaqueous solvent contains at least one selected from the group consisting of ether solvents, acetal solvents, ester solvents, nitrile solvents, carbonate solvents, ketone solvents, amide solvents, and sulfur-containing solvents.

23. The method for producing a lithium iodide nonaqueous solution according to any one of claims 19 to 22,
wherein the nonaqueous solvent is an aprotic solvent.

24. The method for producing a lithium iodide nonaqueous solution according to any one of claims 19 to 23,
wherein the nonaqueous solvent contains at least one selected from the group consisting of ether solvents, acetal solvents, ester solvents, and amide solvents.

25. A method for producing lithium iodide, comprising
drying the lithium iodide nonaqueous solution obtained by the method according to any one of claims 19 to 24 to obtain lithium iodide having a water content of lower than 500 ppm and an acid-derived component content of 12000 ppm or lower.

26. The method for producing lithium iodide according to claim 25,
wherein the drying includes decompressing the lithium iodide nonaqueous solution in an inert gas atmosphere.

27. The method for producing lithium iodide according to claim 26,
wherein the drying includes decompressing the lithium iodide nonaqueous solution to 0.1 kPa or higher and 5.0 kPa or lower in an inert gas atmosphere and maintaining an atmospheric temperature during the decompressing at 20°C or higher and 100°C or lower.

28. A method for producing a nonaqueous solvate of lithium iodide, comprising
drying the lithium iodide nonaqueous solution obtained by the method according to any one of claims 19 to 24 to obtain a nonaqueous solvate of lithium iodide comprising a nonaqueous solvent and lithium iodide.
